# EUROPÄISCHE PATENTSCHRIFT

(11) **EP 1 930 608 B1**
(45) Veröffentlichungstag und Bekanntmachung des Hinweises auf die Patenterteilung: **14.03.2012**
(21) Anmeldenummer: 07018877.6
(22) Anmeldetag: 26.09.2007
(51) Int. Cl.: F16C 13/00, D21G 1/02

(54) **Biegewalze mit einem rohrförmigen Walzenmantel**
Cylinder with a tubular sleeve
Cylindre avec une enveloppe tubulaire

(30) Priorität: 08.12.2006 DE 102006057853
(43) Veröffentlichungstag der Anmeldung: 11.06.2008
(73) Patentinhaber: Xperion GmbH, 32052 Herford (DE)
(72) Erfinder: Fischer, Oliver, Dr., 69124 Heidelberg (DE)
(74) Vertreter: Bittner, Thomas L.

(56) Entgegenhaltungen:
- DE-A1- 19 610 949
- DE-A1- 19 736 575
- DE-B4- 10 153 693

## Beschreibung

Die Erfindung betrifft eine Biegewalze mit einem rohrförmigen Walzenmantel und Walzenzapfen, die es erlauben, den Walzenmantel in einer Richtung durchzubiegen, umfassend Struktur- und Aramidfasern, die in in radialer Richtung übereinander liegenden, einander überkreuzenden Schichten angeordnet und sämtlich in eine Matrix aus Kunstharz eingebettet und durch diese verklebt sind.

Solche Biegewalzen gelangen unter anderem in Breitstreckwerken für flexible Stoffbahnen zur Anwendung. Sie werden zu diesem Zweck zumeist mit zwei voneinander unabhängigen, stirnseitig fest am rohrförmigen Walzenmantel angebrachten, mitrotierenden Walzenzapfen versehen, über den die Biegekräfte in den rohrförmigen Walzenmantel eingeleitet werden.

Bei einer anderen Bauform dieses Walzentyps wird eine solche Durchbiegung des rohrförmigen Walzenmantels erzeugt, in dem dieser mit den Enden einer nicht mitrotierenden, geteilten oder durchgehenden, biegsamen Achse versehen und darauf in Rollenlagern abgestützt wird, die es erlauben, eine gleichmäßige Durchbiegung des Walzenmantels im mittleren Bereichs nach vorn zu erzeugen. Auch dabei werden die Biegekräfte über die Walzenzapfen der biegsamen Achse in den rohrförmigen Walzenmantel eingeleitet, um den Walzenmantel durchzubiegen. Eine darüber geführte Warenbahn wird dadurch in seitlicher Richtung ausgebreitet, was z.B. dazu beiträgt, u.a. Faltenbildungen zu vermeiden. Das andauernde Umwälzen eines solcherart gebogenen, rohrförmigen Walzenmantels um seine Achse ist allerdings mit einer erheblichen Wechsellast in dem rohrförmigen Walzenmantel verbunden, was zu einer schnellen Zerstörung führen kann.

### Stand der Technik:

Eine Biegewalze mit einem Walzenmantel der eingangs genannten Art ist aus der DE 101 53 693 B4 bekannt. Dabei wurden nach längerem Gebrauch im Mikrobereich zwischen den Fasern Rissbildungen beobachtet, die sich im Laufe der Zeit ausbreiten und zu einer Zerstörung des Walzenmantels führen können.

### Darstellung der Erfindung:

Der Erfindung liegt die Aufgabe zu Grunde, eine solche Biegewalze derart weiter zu entwickeln, dass sich bei einer Durchbiegung von bis zu 5 mm pro Meter Länge eine deutlich verbesserte Dauerhaltbarkeit des Walzenmantels ergibt.

Diese Aufgabe wird erfindungsgemäß bei einer Biegewalze der eingangs genannten Art mit den kennzeichnenden Merkmalen von Anspruch 1 gelöst. Auf vorteilhafte Ausgestaltungen nehmen die Unteransprüche Bezug.

Der rohrförmige Walzenmantel ist in radialer Richtung nicht durchgängig auf einem Walzenkern aus Metall abgestützt wie eine durch Aufwickeln von kunstharzgetränkten Fasern auf einen Walzenkern erzeugte Walze, sondern nur an den Enden über die dort fest angebrachten, mitdrehenden Walzenzapfen, durch die zugleich seine Durchbiegung bewirkt wird bzw. über die Lager, mit denen er auf einer nicht mitdrehenden, biegsamen Achse gelagert ist. Die Enden der Achse werden dabei im Sinne der vorstehenden Ausführungen ebenfalls zum Durchbiegen des rohrförmigen Walzenmantels in der Mitte verwendet. Der rohrförmige Walzenmantel ist daher bei der erfindungsgemäßen Biegewalze unabhängig von den ihn tragenden Walzenzapfen bzw. Lagern belastet und zweckmäßig auch gesondert davon erzeugt und erst nachträglich an den Walzenzapfen bzw. Lagern befestigt.

Bei der erfindungsgemäßen Biegewalze umfasst der Walzenmantel Strukturfasern, die durch Kohlenstoff- und/oder Glasfasern gebildet und in ersten und zweiten Schichten angeordnet sind, die in radialer Richtung abwechselnd aufeinander folgen, wobei die in den ersten Schichten enthaltenen Strukturfasern mit der Längsrichtung des Walzenmantels einen Winkel von 70° bis 90° und die in den zweiten Schichten enthaltenen Strukturfasern mit der Längsrichtung einen Winkel von 0° bis 30° einschließen und wobei die ersten und die zweiten Schichten jeweils durch eine dritte Schicht voneinander getrennt sind, die aus Aramidfasern besteht, die mit der Längsrichtung des Walzenmantels einen Winkel von 30° bis 60° einschließen.

Die ersten und zweiten Schichten aus den Kohlenstoff- oder Glasfasern sind somit stets, bei Bedarf wiederkehrend, durch die dritte Schicht aus den Aramidfasern voneinander getrennt. Bedingt durch die spezifischen Eigenschaften der jeweiligen Faserart werden im Mikrobereich auftretende, belastungsbedingte Rissbildungen daran gehindert, sich auszubreiten und größere Schäden im Walzenmantel zu erzeugen.

Die in den Schichten enthaltenen Fasern sind zweckmäßig in Fasersträngen enthalten, die während der Verarbeitung mit dem Kunstharz getränkt und unter einer Vorspannung gemeinsam auf einen Wickelkern aufgewickelt werden, auf dem das Kunstharz nachfolgend verfestigt wird. Anschließend kann der Wickelkern entfernt werden.

Die in den Schichten enthaltenen Fasern können auch in eigenfesten, selbsttragenden, textilen Flächengebilden vorliegen und im Sinne der vorstehenden Darlegung mit Kunstharz getränkt und dann aufgewickelt werden.

Die Flächengebilde können dabei als Prepreg, Gewebe, Geflecht, Gelege, Gewirke und/oder als Vliesstoff vorliegen.

Die in Geweben oder Gelegen enthaltenen Fasern sind hinsichtlich ihrer Ausrichtung klar erkennbar lassen sich dadurch beim Wickelprozess problemlos so orientieren, dass sie in dem daraus gebildeten Walzenmantel in jeder der Schichten exakt die vorgeschriebene Richtung einnehmen, bezogen auf die Längsrichtung des Walzenmantels.

Die in Vliesstoffen enthaltenen Fasern sind hinsichtlich ihrer Ausrichtung schwieriger erkennbar, weil neben den orientierten Faserbestandteilen statistisch wirr orientierte Faseranteile vorhanden sein können. Die Hauptorientierung der Fasern kann aber in solchen Fällen durch Pfeile o.ä. kenntlich gemacht werden, um beim Wickelprozess Fehler hinsichtlich der Faserorientierung zu vermeiden. Dies ist beim Wickelprozess besonders wichtig, um die jeweils gewünschten und notwendigen Tragfähigkeiten zu erhalten.

Im Rahmen der vorliegenden Erfindung werden auch die Fasern solcher eigenfesten Flächengebildes stets zusätzlich durch die Kunstharzmatrix miteinander verklebt. Falls bereits ein Kunstharz enthalten ist, wie z.B. in einem Prepreg, erfolgt dies zweckmäßig unter Verwendung desselben Kunstharzes. Zweckmäßig wird das Kunstharz bei der Herstellung des Vliesstoffes nur in einen Zustand überführt, der es ermöglicht, die chemische Vernetzung parallel zu der chemischen Vernetzung des übrigen Kunstharzes der Kunstharzmatrix vorzunehmen. Hierdurch ergeben sich durchgängige chemische Bindungen über den gesamten Querschnitt der Kunstharzmatrix, was zu einer deutlichen Steigerung der Festigkeit führt.

Von besonderem Vorteil ist es unter dem Gesichtspunkt der Festigkeit, wenn die in den ersten, zweiten und/oder dritten Schichten enthaltenen Fasern durch Epoxidharz verklebt sind. Dieses weist eine gute Benetz- und Verarbeitbarkeit auf.

Der Fasergehalt der ersten und zweiten Schichten beträgt 30 bis 65 Vol.-%, bevorzugt 40 bis 50 Vol.-%.

Die in den dritten Schichten enthaltenen Fasern sind zweckmäßig durch ein aminhärtendes Epoxidharz verklebt, wobei der Fasergehalt 30 bis 65 Vol.-% beträgt, vorzugsweise 40 bis 50 Vol.-%. Der Fasergehalt ist somit niedriger als der Fasergehalt in den ersten und zweiten Schichten. Während die ersten und zweiten Schichten Trag- und Verarbeitungsfunktionen haben, ist die Aufgabe der dritten Schicht oder Schichten darauf gerichtet, die Ausbreitung von Rissbildungen im Walzenmantel zu verhindern.

Die dritten Schichten enthalten zu diesem Zweck bevorzugt Fasern eines Durchmessers von 5 µm bis 20 µm. Es wurde gefunden, dass vor allem in diesem Bereich Mikrorisse an den Fasergrenzen nicht mehr im früheren Umfang auftreten.

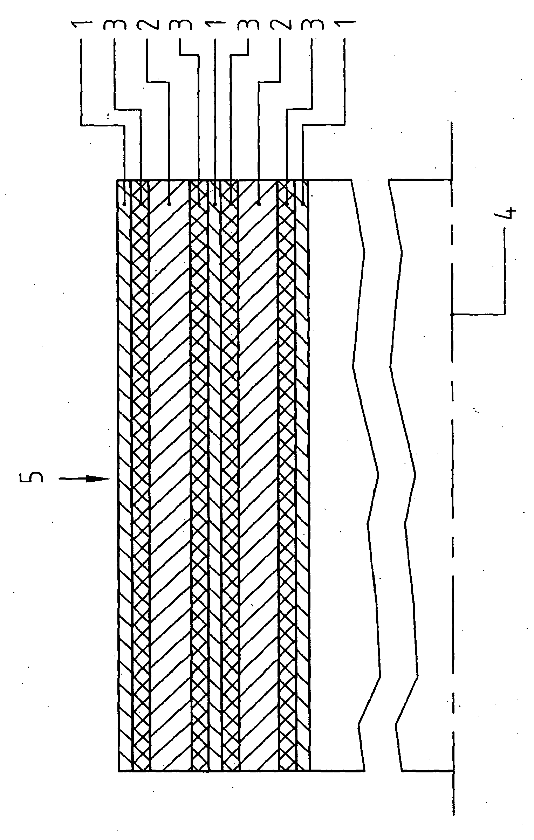

### Kurzbeschreibung der Zeichnung:

In der Zeichnung ist ein Ausschnitt aus einem rohrförmigen Walzenmantel gezeigt beschrieben.

### Bevorzugtes Ausführungsbeispiel:

In der Zeichnung ist ein Ausschnitt aus einem rohrförmigen Walzenmantel für eine Biegewalze der erfindungsgemäßen Art beschrieben. Er wird nachfolgend näher erläutert:
Der gezeigte Walzenmantel ist für die Herstellung einer Biegewalze bestimmt, die in einem Breitstreckwerk zur Anwendung gelangen kann. Er ist unabhängig von seiner Achse rotierbar und entweder durch Rollenlager auf einer nicht rotierbaren Achse aus Stahl abgestützt oder durch an seinen stirnseitigen Enden festgelegte Flanschlager auf nicht rotierbaren Achsstummeln. Über die Achse oder die Achsstummel lassen sich gleichgerichtete Biegekräfte einleiten, die eine Durchbiegung des Walzenmantels in einer definierten Richtung im mittleren Bereich bewirken. Der durchgebogene Walzenmantel ist beim Rotieren um die Achse großen Walkbeanspruchungen ausgesetzt. Um diese Beanspruchungen unter Vermeidung von Rissen auf die Dauer aufnehmen zu können, umfasst er Struktur- und Aramidfasern, die in radialer Richtung übereinander liegenden, einander überkreuzenden Schichten 1, 2 und 3 angeordnet und sämtlich in eine Matrix aus Kunstharz eingebettet und durch diese verklebt sind.

Die Strukturfasern der ersten und zweiten Schichten 1, 2 sind durch Kohlenstoff- und/oder Glasfasern gebildet und in ersten und zweiten Schichten angeordnet, die in radialer Richtung abwechselnd aufeinander folgen, wobei die in den ersten Schichten enthaltenen Strukturfasern mit der Längsrichtung des Walzenmantels einen Winkel von 70° bis 90° und die in den zweiten Schichten enthaltenen Strukturfasern mit der Längsrichtung des Walzenmantels einen Winkel von 0° bis 30° einschließen und wobei die ersten und die zweiten Schichten jeweils durch die die dritte Schicht 3 bildenden Aramidfasern voneinander getrennt sind, die mit der Längsrichtung einen Winkel von 30° bis 60° einschließen.

Die in den Schichten und enthaltenen Fasern sind in Fasersträngen enthalten, die während der Herstellung des Walzenmantels mit einem in flüssiger Form vorliegendem Kunstharz getränkt und unter einer Zugspannung fortschreitend auf einen Walzenkern aufgewickelt werden, auf dem die Verfestigung des Kunstharzes erfolgt. Zumeist gelangt als Kunstharz Epoxidharz zur Anwendung.

Der Fasergehalt der ersten und zweiten Schichten beträgt 30 bis 65 Vol.-%, bevorzugt 45 bis 50 Vol.-%.

Als vorteilhaft hat es sich erwiesen, wenn die in den dritten Schichten enthaltenen Fasern durch ein aminhärtendes Epoxidharz verklebt sind.

Der Fasergehalt der dritten Schichten soll 30 bis 65 Vol.-% betragen, bevorzugt 40 bis 50 Vol.-%, wobei die dritten Schichten zweckmäßig Fasern eines Durchmessers von 5 µm bis 20 µm enthalten.

### Ausführungsbeispiel:

Es wird nachfolgend ein Walzenmantel einer Länge von 3200 mm beschrieben, der bei einem Außendurchmesser von 143,4 mm einen Innendurchmesser von 133 mm hat und in Bezug auf die Herstellung einer Biegewalze zur Anwendung gelangt, die mit einer durchgehend ausgebildeten, nicht rotierenden, biegsamen Achse aus Stahl versehen ist und die während der bestimmungsgemäßen Verwendung durch die Walzenzapfen in einer Richtung soweit durchgebogen wird, dass sich in der Mitte eine Auslenkung von 15 mm ergibt. Zu diesem Zweck ist der Walzenmantel durch mehrere gleichmäßig über die Länge verteilte Rollenlager auf der Achse abgestützt. Die Biegewalze gelangt in einem Breitstreckwerk für eine flexible Warenbahn zu Anwendung und rotiert im normalen Betrieb mit 1500 U/min.

Der Walzenmantel ist wie folgt aufgebaut:

| Schicht | Faserart | Winkel der Faser / Längsrichtung | Innendurchmesser der Lage | Faservolumengehalt | Schichtdicke | Außendurchmesser |
|---|---|---|---|---|---|---|
| 1 | Kohlenstofffaser | 87° | 133,0 mm | 50 % | 0,3 mm | 133,6 mm |
| 3 | Aramidfaser | +/- 40° | 133,6 mm | 50 % | 0,4 mm | 134,5 mm |
| 2 | Kohlenstofffaser | +/- 12° | 136,3 mm | 50 % | 0,9 mm | 138,0 mm |
| 3 | Aramidfaser | +/- 40° | 138,0 mm | 50 % | 0,4 mm | 138,9 mm |
| 1 | Kohlenstofffaser | 87° | 138,9 mm | 50 % | 0,3 mm | 139,5 mm |
| 3 | Aramidfaser | +/- 40° | 139,5 mm | 50 % | 0,4 mm | 140,3 mm |
| 2 | Kohlenstofffaser | +/- 12° | 140,3 mm | 50 % | 0,9 mm | 142,0 mm |
| 3 | Aramidfaser | +/- 40° | 142,0 mm | 50 % | 0,4 mm | 142,8 mm |
| 1 | Kohlenstofffaser | 87° | 142,8 mm | 50 % | 0,3 mm | 143,4 mm |

Die die dritten Schichten bildenden Aramidfasern haben einen Durchmesser von 10 µm. Sie sind durch ein aminhärtendes Epoxidharz verklebt, während die Fasern der ersten und der zweiten Schichten durch dasselbe Epoxidharz verklebt sind.

## Patentansprüche

1. Biegewalze mit einem rohrförmigen Walzenmantel und Walzenzapfen, die es erlauben, den Walzenmantel in einer Richtung durchzubiegen, umfassend Struktur- und Aramidfasern, die in in radialer Richtung übereinander liegenden, einander überkreuzenden Schichten angeordnet und sämtlich in eine Matrix aus Kunstharz eingebettet und durch diese verklebt sind, **dadurch gekennzeichnet, dass** die Strukturfasern durch Kohlenstoff- und/oder Glasfasern gebildet und in ersten und zweiten Schichten (1, 2) angeordnet sind, die in radialer Richtung abwechselnd aufeinander folgen, wobei die in den ersten Schichten (1) enthaltenen Strukturfasern mit der Längsrichtung (4) des Walzenmantels (5) einen Winkel von 70° bis 90° und die in den zweiten Schichten (2) enthaltenen Strukturfasern mit der Längsrichtung (4) einen Winkel von 0° bis 30° einschließen und wobei die ersten und die zweiten Schichten (1,2) jeweils durch eine dritte Schicht (3) voneinander getrennt sind, die aus Aramidfasern besteht, die mit der Längsrichtung (4) des Walzenmantels (5) einen Winkel von 30° bis 60° einschließen.

2. Biegewalze nach Anspruch 1, **dadurch gekennzeichnet, dass** die in den Schichten (1, 2, 3)und enthaltenen Fasern in Fasersträngen enthalten sind.

3. Biegewalze nach Anspruch 1, **dadurch gekennzeichnet, dass** die in den Schichten (1, 2, 3) enthaltenen Fasern in selbsttragenden, textilen Flächengebilden enthalten sind.

4. Biegewalze nach Anspruch 3, **dadurch gekennzeichnet, dass** die Flächengebilde Prepregs, Gewebe, Geflecht, Gelege, Gewirke und/oder Vliesstoffe sind.

5. Biegewalze nach einem der Ansprüche 1 bis 4, **dadurch gekennzeichnet, dass** die in den ersten, zweiten und/oder dritten Schichten (1, 2, 3) enthaltenen Fasern durch Epoxidharz verklebt sind.

6. Biegewalze nach Anspruch 5, **dadurch gekennzeichnet, dass** der Fasergehalt der ersten und zweiten Schichten (1, 2) 30 bis 65 Vol.-% beträgt.

7. Biegewalze nach Anspruch 6, **dadurch gekennzeichnet, dass** der Fasergehalt der ersten und zweiten Schichten (1, 2) 45 bis 50 Vol.-% beträgt.

8. Biegewalze nach einem der Ansprüche 1 bis 7, **dadurch gekennzeichnet, dass** die in den dritten Schichten (3) enthaltenen Fasern durch ein aminhärtendes Epoxidharz verklebt sind.

9. Biegewalze nach einem der Ansprüche 1 bis 8, **dadurch gekennzeichnet, dass** der Fasergehalt der dritten Schichten (3) 30 bis 65 Vol.-% beträgt.

10. Biegewalze nach Anspruch 1 bis 9, **dadurch gekennzeichnet, dass** der Fasergehalt der dritten Schichten (3) 40 bis 50 Vol.-% beträgt.

11. Biegewalze nach einem der Ansprüche 1 bis 10, **dadurch gekennzeichnet, dass** die dritten Schichten (3) Fasern eines Durchmessers von 5 µm bis 20 µm enthalten.

## Claims

1. A bending roll with a tubular roll sleeve and roll necks that make it possible to deflect the roll sleeve in one direction, comprising structural and aramid fibers arranged in the form of layers that lie on top of one another in the radial direction and intersect one another, wherein all layers are embedded in and bonded together by a matrix of synthetic resin, **characterized in that** the structural fibers consist of carbon and/or glass fibers and form first and second layers (1, 2) that are arranged in alternating succession in the radial direction, wherein the structural fibers contained in the first layers (1) enclose an angle of 70° to 90° with the longitudinal direction (4) of the roll sleeve (5) and the structural fibers contained in the second layers (2) enclose an angle of 0° to 30° with the longitudinal direction (4) of the roll sleeve, and wherein the first and the second layers (1, 2) are respectively separated from one another by a third layer (3) consisting of aramid fibers that enclose an angle of 30° to 60° with the longitudinal direction (4) of the roll sleeve (5).

2. The bending roll according to Claim 1, **characterized in that** the fibers contained in the layers (1, 2, 3) are contained in fiber strands.

3. The bending roll according to Claim 1, **characterized in that** the fibers contained in the layers (1, 2, 3) are contained in self-supporting textile fabrics.

4. The bending roll according to Claim 3, **characterized in that** the fabrics consist of prepregs, woven fabrics, braided fabrics, non-woven fabrics, knitted fabrics and/or formed fabrics.

5. The bending roll according to one of Claims 1 to 4, **characterized in that** the fibers contained in the first, second and/or third layers (1, 2, 3) are bonded together by means of epoxy resin.

6. The bending roll according to Claim 5, **characterized in that** the fiber content of the first and second layers (1, 2) lies between 30 and 65 vol.%.

7. The bending roll according to Claim 6, **characterized in that** the fiber content of the first and second layers (1, 2) lies between 45 and 50 vol.%.

8. The bending roll according to one of Claims 1 to 7, **characterized in that** the fibers contained in the third layers (3) are bonded together by means of an amine-hardening epoxy resin.

9. The bending roll according to one of Claims 1 to 8, **characterized in that** the fiber content of the third layers (3) lies between 30 and 65 vol.%.

10. The bending roll according to Claims 1 to 9, **characterized in that** the fiber content of the third layers (3) lies between 40 and 50 vol.%.

11. The bending roll according to one of Claims 1 to 10, **characterized in that** the third layers (3) contain fibers with a diameter of 5 µm to 20 µm.

## Revendications

1. Cylindre à cintrer comportant une chemise de cylindre de forme tubulaire et un tourillon de cylindre que permettent de cintrer la chemise de cylindre dans un sens, contenant des fibres structurelles et d'aramide qui sont disposées dans des couches superposées se croisant dans le sens radial et sont totalement noyées dans une matrice en résine synthétique et collées par celle-ci, **caractérisé en ce que** les fibres structurelles sont formées par des fibres de carbone et/ou de verre et disposées dans de premières et deuxièmes couches (1, 2) qui se succèdent alternativement dans le sens radial, les fibres structurelles contenues dans les premières couches (1) circonscrivant avec le sens longitudinal (4) de la chemise du cylindre (5) un angle de 70° à 90° et les fibres structurelles contenues dans les deuxièmes couches (2) circonscrivant avec le sens longitudinal (4) un angle de 0° à 30° et les premières et deuxièmes couches (1, 2) étant respectivement séparées les unes des autres par une troisième couche (3) qui est faite de fibres d'aramide qui circonscrivent un angle de 30° à 60° avec le sens longitudinal (4) de la chemise du cylindre (5).

2. Cylindre à cintrer selon la revendication 1, **caractérisé en ce que** les fibres contenues dans les couches (1, 2, 3) sont contenues dans des cordons de fibres.

3. Cylindre à cintrer selon la revendication 1, **caractérisé en ce que** les fibres contenues dans les couches (1, 2, 3) sont contenues dans des textiles autoporteurs.

4. Cylindre à cintrer selon la revendication 3, **caractérisé en ce que** les textiles sont des pré-imprégnés, tissages, nattés, tissus, mailles et/ou non-tissés.

5. Cylindre à cintrer selon une des revendications 1 à 4, **caractérisé en ce que** les fibres contenues dans les premières, deuxièmes et/ou troisièmes couches (1, 2, 3) sont collées avec de la résine époxyde.

6. Cylindre à cintrer selon la revendication 5, **caractérisé en ce que** la teneur en fibres des premières et deuxièmes couches (1, 2) représente jusqu'à 65 % en volume.

7. Cylindre à cintrer selon la revendication 6, **caractérisé en ce que** la teneur en fibres des premières et deuxièmes couches (1, 2) représente 45 à 50 % en volume.

8. Cylindre à cintrer selon une des revendications 1 à 7, **caractérisé en ce que** les fibres contenues dans les troisièmes couches (3) sont collées avec une résine époxyde durcie aux amines.

9. Cylindre à cintrer selon une des revendications 1 à 8, **caractérisé en ce que** la teneur en fibres des troisièmes couches (3) représente 30 à 65 % en volume.

10. Cylindre à cintrer selon les revendications 1 à 9, **caractérisé en ce que** la teneur en fibres des troisièmes couches (3) représente 40 à 50 % en volume.

11. Cylindre à cintrer selon les revendications 1 à 10, **caractérisé en ce que** les troisièmes couches (3) comprennent des fibres d'un diamètre de 5 µm à 20 µm.
